Europäisches Patentamt

European Patent Office

Office européen des brevets

(19)

(11) Veröffentlichungsnummer: **0 260 759**

**A2**

# (12) EUROPÄISCHE PATENTANMELDUNG

(21) Anmeldenummer: 87201757.9

(22) Anmeldetag: 15.09.87

(51) Int. Cl.⁴: **C09K 5/06**

(30) Priorität: **17.09.86 DE 3631612**

(43) Veröffentlichungstag der Anmeldung:
**23.03.88 Patentblatt 88/12**

(84) Benannte Vertragsstaaten:
**AT DE FR GB IT**

(71) Anmelder: **Philips Patentverwaltung GmbH
Wendenstrasse 35 Postfach 10 51 49
D-2000 Hamburg 1(DE)**

(84) **DE**

(71) Anmelder: **N.V. Philips' Gloeilampenfabrieken
Groenewoudseweg 1
NL-5621 BA Eindhoven(NL)**

(84) **FR GB IT AT**

(72) Erfinder: **Gawron, Klaus
Florastrasse 2
D-5100 Aachen(DE)**
Erfinder: **Schröder, Johann, Dr.
Adenauerallee 125a
D-5100 Aachen(DE)**
Erfinder: **Huszar, Reinhard, Dr.
Kirschentheuer 71
A-9162 Strau/Kärnten(AT)**

(74) Vertreter: **Piegler, Harald, Dipl.-Chem. et al
Philips Patentverwaltung GmbH
Wendenstrasse 35 Postfach 10 51 49
D-2000 Hamburg 1(DE)**

(54) **Latentwärmespeichermittel und dessen Verwendung.**

(57) Dem Eutektikum Kaliumchlorid-Wasser werden 7 bis 25 Vol.% des Eutektikums Ammoniumchlorid-Wasser zugemischt. Die Speichertemperaturen werden dadurch von -10,7°C kontinuierlich auf etwa -13,5°C abgesenkt. Dieser Temperaturbereich ist bei der Verwendung als Latentwärmespeichermittel in einem Kältespeicher für die Speiseeisherstellung besonders günstig.

## Latentwärmespeichermittel und dessen Verwendung

Die Erfindung betrifft ein Latentwärmespeichermittel mit Phasenübergang fest-flüssig und umgekehrt auf der Basis des Eutektikums Kaliumchlorid-Wasser mit 19,54 Gew.% Kaliumchlorid und einem Zusatz in Form des Eutektikums Ammoniumchlorid-Wasser mit 19,5 Gew.% Ammoniumchlorid. Ferner betrifft die Erfindung die Verwendung eines derartigen Latentwärmespeichermittels.

Ein derartiges Latentwärmespeichermittel ist aus dem Seminarbericht von A.S. Strub und H. Ehringer (Herausgeber) "New Ways to Save Energy" Proceedings of the International Seminar held in Brussels, 23-25 October 1979, S. 495-504, bekannt. Ein darin erwähntes Latentwärmespeichermittel enthält das Eutektikum Kaliumchlorid-Wasser und einen Zusatz von 3 Vol.% des Eutektikums Ammoniumchlorid-Wasser (Seite 503, Tabelle IV).

Aus DE-A-2 846 988 ist es bekannt, einem Latentwärmespeichermittel, das ein eutektisches Gemisch aus Wasser und einem Salzhydrat enthält, 1 bis 6 Vol.% eines zweiten Wasser-Salzhydrat-Eutektikums zuzusetzen.

Nach dem zuvor erwähnten Seminarbericht beträgt die Schmelztemperatur des reinen Eutektikums Ammoniumchlorid-Wasser -16,0°C und die des reinen Eutektikums Kaliumchlorid-Wasser -10,7°C.

Dem Buch von P. Pascal (Herausgeber) "Nouveau Traité de Chimie Minérale" Tome II, Deuxième Fascicule "Potassium" (Paris 1963) S. 130-131 ist zu entnehmen, daß die Schmelztemperatur des Eutektikums Kaliumchlorid-Wasser mit zunehmendem Gehalt an dem Eutektikum Ammoniumchlorid-Wasser bis -17,9°C absinkt (S. 131, Fig. 31 bis).

Bei den Untersuchungen, die zur Erfindung geführt haben, hat sich herausgestellt, daß die Anwendung von Kältespeichern, die mit den Eutektika Ammoniumchlorid-Wasser oder Kaliumchlorid-Wasser gefüllt sind, bei der Speiseeisherstellung einige Nachteile hat.

Die Schmelztemperatur des Eutektikums Ammoniumchlorid-Wasser ist zwar für die Herstellung aller Speiseeissorten sehr günstig. Der Unterschied zwischen der Temperatur in gebräuchlichen Tiefkühlfächern von Kühlschränken (-15 bis -19°C) und der Schmelztemperatur dieses Latentwärmespeichermittels ist aber sehr klein. Daher ist die Zeit, während der der Kältespeicher zu seiner Regenerierung im Tiefkühlfach liegen muß, bis das Speichermittel wieder vollkommen fest geworden ist, zu lang, und in ungünstigen Fällen wird das Speichermittel überhaupt nicht gefrieren. Die Schmelztemperatur des Eutektikums Kaliumchlorid-Wasser ist zwar in dieser Hinsicht sehr viel günstiger. Ein Nachteil ist es aber, daß eine Speichertemperatur von -10,7°C für die Herstellung bestimmter Eissorten schon etwas zu hoch ist. So können zwar alle Eiskremsorten in bester Qualität hergestellt werden, für einige Sorbetsorten reicht aber die Temperatur nicht aus, um Eis von genügend fester Konsistenz zu erhalten.

Aufgabe der Erfindung ist es, ein Latentwärmespeichermittel zu schaffen, das die guten Eigenschaften der beiden reinen Eutektika, wie z.B. eine große Schmelzwärme, aufweist, dessen Schmelz-und Speichertemperatur aber zwischen den Schmelztemperaturen dieser Eutektika rangiert. Hierbei sind Schmelztemperaturen von etwa -12 bis -14°C als besonders günstig anzustreben.

Diese Aufgabe wird erfindungsgemäß dadurch gelöst, daß das Latentwärmespeichermittel das Eutektikum Kaliumchlorid-Wasser und einen Zusatz von 7 bis 25 Vol.% des Eutektikums Ammoniumchlorid-Wasser enthält. Die Speichertemperaturen werden dadurch von -10,7°C kontinuierlich auf etwa -13,5°C abgesenkt.

Ein besonders günstiger Mischungsbereich liegt zwischen 80 und 90 Vol.% des Eutektikums Kaliumchlorid-Wasser, mit dem Eutektikum Ammoniumchlorid-Wasser zu 100 Vol.% ergänzt. Die Schmelztemperaturen dieser Speichermittel liegen zwischen -13 und -11,5°C.

Um eine Unterkühlung des Speichermittels zu unterdrücken, ist es zweckmäßig, dem Speichermittel feste Keimbildner, z.B. poröses $Al_2O_3$ oder $MgO$, in Mengen von 0,05 bis 1 Gew.% zuzusetzen.

Wie zahlreiche experimentelle Untersuchungen zeigen, tritt bei dem erfindungsgemäßen Latentwärmespeichermittel unter den in der Praxis der Eisherstellung gegebenen Bedingungen auch nach vielen Speicherzyklen keine störende Entmischung und keine Reduzierung der Schmelzwärme auf.

### Ansprüche

1. Latentwärmespeichermittel mit Phasenübergang fest-flüssig und umgekehrt auf der Basis des Eutektikums Kaliumchlorid-Wasser mit 19,54 Gew.% Kaliumchlorid und einem Zusatz in Form des Eutektikums Ammoniumchlorid-Wasser mit 19,5 Gew.% Ammoniumchlorid, dadurch gekennzeichnet, daß das Latentwärmespeichermittel das Eutektikum Kaliumchlorid-Wasser und einen Zusatz von 7 bis 25 Vol.% des Eutektikums Ammoniumchlorid-Wasser enthält.

2. Latentwärmespeichermittel nach Anspruch 1, dadurch gekennzeichnet, daß es zwischen 80 und 90 Vol.% des Eutektikums Kaliumchlorid-Wasser, mit dem Eutektikum Ammoniumchlorid-Wasser zu 100 Vol.% ergänzt, enthält.

3. Latentwärmespeichermittel nach Anspruch 1, dadurch gekennzeichnet, daß es feste Keimbildner in Mengen von 0,05 bis 1 Gew.% enthält.

4. Verwendung des Latentwärmespeichermittels nach Anspruch 1 bis 3 in einem Kältespeicher für die Speiseeisherstellung.